# EUROPEAN PATENT APPLICATION

(11) **EP 1 544 831 A1**
(43) Date of publication of application: **22.06.2005**
(21) Application number: 03798474.7
(22) Date of filing: 25.09.2003
(51) Int. Cl.: G09B 5/08, G06F 17/60, H04N 7/15

(54) **REMOTE EDUCATION SYSTEM, COURSE ATTENDANCE CHECK METHOD, AND COURSE ATTENDANCE CHECK PROGRAM**

(30) Priority: 27.09.2002 JP 2002282879
(71) Applicant: Ginganet Corporation, Osaka-shi, Osaka 556-0017 (JP)
(72) Inventor: SARUHASHI, Nozomu, Kishiwada-shi, Osaka 596-0045 (JP)
(74) Representative: Schoppe, Fritz, Dipl.-Ing.
(86) International application number: PCT/JP2003/012190
(87) International publication number: WO 2004/029905

(57) **Abstract**

A remote education system is provided which prevents a substitute attendance by a third person using prerecorded video and the like in the remote education, and enables confirmation that the legitimate student is in attendance. The remote education system (1) comprises a Web server (10), a bidirectional communication server (20), a content distribution server (30), an operations management system (40), a lecturer terminal (60), and a communication line connection device (70), and provides remote education to student terminals (101, 102, and so on) via the Internet (2). The operations management system (40) comprises a lecture information database (50) for storing lecture schedules, attendance records, and personal information, facial images, audio, and the like of the students, and performs a lecture establishment processing (41), an attendance registration processing (42), a lecture opening processing (43), an attendance confirmation processing (44), and the like. The attendance confirmation processing (44) includes a student image acquisition processing (45), a facial image matching processing (46), an action request processing (47), and an action detection processing (48), which match facial images of students, and detect image changes that occur in response to requested actions.

## Description

### TECHNICAL FIELD

The present invention relates to a remote education system which enables education to be conducted over distances using bi-directional communication involving multimedia including video and audio, and more particularly to a remote education system which has an attendance confirmation function for confirming whether a legitimate student is in attendance, an attendance confirmation method, and an attendance confirmation program.

### BACKGROUND ART

Recently, with advances in communication technology, remote education systems have begun to be implemented which use bi-directional communication based on multimedia, including video and audio, to allow a student to gain education over distances via communication lines.

Such remote education systems are to be authorized as valid means of education, but to authorize acquisition of units and accreditation of qualifications, confirmation of student attendance must be able to be performed accurately. In particular, in remote education, there are cases where there is one lecturer for a large number of students, or where the student attends a programmed un-manned lecture in an autonomous manner, and for these reasons it is thought that a student attendance confirmation method that does not rely on human resources is required.

A conventional method of confirming the attendance of a student is an audio-visual authentication method, as disclosed in PCT Republished International Publication No. WO 00-59226 for example. In this system, the broadcast program provider displays a unique viewing confirmation code to the viewer with unique timing, and in response, the viewer transmits the viewing confirmation code, which is input from the audio-visual terminal, to the audio-visual authentication system together with the input time, and the audio-visual authentication system then determines whether or not the viewer actually watched the program based on the transmitted viewing confirmation code and input time.

However, although such a conventional audio-visual authentication system uses the input viewing confirmation code and the time information to determine whether a viewer has viewed a program, this only allows the system to confirm that a viewer has viewed the program, but there is no assurance that the viewer is the legitimate registered student. Accordingly, if the legitimate student asks a third person to be a substitute attendance, for example, attendance is recorded as if the legitimate student were in attendance. Furthermore, when a student takes an examination using the remote education system, the legitimate student can easily ask a third person to be a substitute examinee.

On the other hand, conventional methods of confirming that the student is the legitimate registered student include a password authentication method in which the student inputs a preregistered password, a personal information question confirmation method in which the student is asked a question about preregistered personal information, an image matching method in which an image is taken of the face or the like of the student and matched to a preregistered image of the face or the like of the student, and an audio matching method in which audio of the student is captured and matched to preregistered audio of the student.

However, in the case of the password authentication and personal information question confirmation methods, by simply informing a third person of his or her password or personal information, the legitimate student can still ask the third person to be a substitute attendance.

Furthermore, even in the case of the image matching method and the audio matching method, it is still possible for a third person to attend instead of the legitimate student if the person who receives the attendance confirmation request sends prerecorded video or prerecorded audio of the legitimate student from the terminal.

Thus, conventional attendance confirmation methods present a problem in that it is possible for a legitimate student to intentionally ask a third person to be a substitute attendance, and it is difficult to verify that the legitimate student is actually in attendance.

Therefore, a primary object of the present invention is to provide a remote education system which, in the context of remote education, prevents a substitute attendance performed by a third person from using prerecorded video or the like, and enable to confirm that the legitimate student is in attendance.

### DISCLOSURE OF THE INVENTION

A remote education system according to a first aspect is a remote education system that enables education over distances using multimedia bi-directional communication, including video and audio, comprising student video acquisition means for acquiring video of the student, facial image matching means for matching the video acquired by the student video acquisition means with a preregistered facial image of the student, action request means for requesting the student to perform an action, and action detection means for detecting the action performed by the student on the basis of image changes in the video of the student acquired by the student video acquisition means, thereby providing the system with a function for confirming that the legitimate student is in attendance.

Because video of the student transmitted from the student terminal is acquired by the student video acquisition means, and this acquired video of the student is matched with a preregistered facial image of the student, it is possible to confirm that the acquired video is video of the legitimate student. Furthermore, because the student is requested to perform an action by the action request means, and the actions of the student are then detected by the action detection means, on the basis of image changes in the acquired video of the student, it is possible to detect a substitute attendance, because the image changes corresponding to the action request do not occur if the legitimate student ask a third person to be a substitute attendance using prerecorded video or the like, and thus the attendance of the legitimate student can be confirmed.

Examples of the action requested the student to perform by the action request means include any action that causes changes in the acquired video, and suitable examples include moving the head, closing the eyes, moving the mouth, or raising a hand.

A remote education system according to a second aspect is a remote education system according to the first aspect, wherein the action request means includes a function for requesting that the student moves the position of his or her face, and the action detection means includes a function for detecting whether the position of the face of the student has moved.

Because the action request means requests the student to move the position of his or her face, and the movement of the student's face position is then detected by the action detection means, on the basis of the image changes in the acquired video, it is possible to detect a substitute attendance, because the position of the face does not move as instructed if the legitimate student ask a third person to be a substitute attendance using prerecorded video or the like, and thus the attendance of the legitimate student can be confirmed.

A remote education system according to a third aspect is a remote education system according to either one of the first and second aspects, wherein the action request means includes a function for asking the student a question and requesting an audio response, and the action detection means includes a function for acquiring audio of the student, a function for recognizing the audio response from the acquired audio, a function for determining the validity of the audio response of the student from the recognized audio response, and a function for detecting movement of the mouth of the student accompanying the audio response by the student.

Because the action request means asks the student a question and requests an audio response, and the action detection means then acquires audio of the student, recognizes the audio response, and determines the validity of the audio response from the student, while also detecting the movement of the mouth of the student accompanying the audio response from image changes in the acquired video, confirmation can be obtained that the student determined to be the legitimate student by the facial image matching means has provided the audio response to the question, and thus the attendance of the legitimate student can be confirmed.

A remote education system according to a fourth aspect is a remote education system according to the third aspect, wherein the action detection means includes a function for matching the audio response of the student with preregistered audio of the student.

Because the audio response of the student is matched to preregistered audio of the student by the action detection means, voice matching of the student is performed in addition to face matching, which allows the attendance of the legitimate student to be confirmed even more reliably.

A remote education system according to a fifth aspect is a remote education system according to the third aspect or the fourth aspect, wherein the action request means includes a function for asking the student a question relating to time and requesting an audio response, and the action detection means includes a function for determining the validity of the time given in response by the student.

Because the student is asked a question relating to time by the action request means, and the action detection means then determines the validity of the time given in response by the student, while also detecting the movement of the mouth of the student accompanying the audio response from image changes in the acquired video, it is possible to detect a substitute attendance, because a third person cannot provide an audio response to the question relating to time if the legitimate student ask the third person to be a substitute attendance using prerecorded video or the like, and thus the attendance of the legitimate student can be confirmed.

For example, the question relating to time may be a request for the student to provide an audio response consisting of the current time, and the validity of the time provided as an audio response by the student may then be determined by comparing the current time to the time obtained by performing speech recognition of the audio response of the student.

A remote education system according to a sixth aspect is a remote education system according to any one of the third through fifth aspects, wherein the action request means includes a function for asking a question relating to personal information of the student and requesting an audio response, and the action detection means includes a function for matching the personal information given in response by the student with preregistered personal information relating to that student.

Because the student is asked a question about his or her personal information by the action request means, and the action detection means then matches the personal information given in response by the student with preregistered personal information relating to that student, while also detecting the movement of the mouth of the student accompanying the audio response from image changes in the acquired video, it is possible to detect an substitute attendance, because a third person cannot provide an audio response to the question relating to personal information if the legitimate student ask the third person to be an substitute attendance using prerecorded video or the like, and thus the attendance of the legitimate student can be confirmed.

The personal information of the student requested as an audio response is preferably selected at random from a plurality of preregistered items of personal information. By doing so, a substitute attendance cannot predict the answer in advance, and it is possible to confirm that the legitimate student is in attendance with even greater reliability.

A remote education system according to a seventh aspect is a remote education system according to any one of the first through sixth aspects, wherein the action detection means includes a function for determining that the facial image of the student does not move in a discontinuous manner.

According to this aspect, because it is possible to detect discontinuous positional changes in the facial image that occur when a third person attendee switches the video sent from the terminal to a prerecorded video in response to an action request, it is possible to prevent a substitute attendance by a third person with greater certainty, and confirm the attendance of the legitimate student with even greater reliability.

A remote education system according to an eighth aspect is a remote education system according to any one of the first through seventh aspects, wherein the action detection means has a function for determining whether image changes occur within a specified time of the action request means requesting the student to perform an action.

According to this aspect, it is possible to determine non-attendance of the legitimate student if the required image changes do not occur within a predetermined time of the action being requested. Accordingly, even supposing that it were possible to generate video and the like corresponding to the action request at the terminal, the substitute attendee can be denied sufficient time to prepare such video, and it is therefore possible to confirm that the legitimate student is in attendance with even greater certainty.

A remote education system according to a ninth aspect is a remote education system according to any of the first through eighth aspects, wherein the action request means has a function for using unpredictable timing when requesting the student to perform an action.

According to this aspect, because the student cannot predict when an action request will occur, the student cannot leave the student terminal during a lecture, which works as an incentive to ensure that the student is continuously in attendance throughout the entire lecture.

A remote education system according to a tenth aspect is a remote education system according to any one of the first through ninth aspects, wherein the action request means has a function for requesting the student to perform an action based on a command by the lecturer.

According to this aspect, because the lecturer can control the timing with which action requests are issued to students, attendance confirmation can be performed without impacting on the learning of the student.

An attendance confirmation method according to an eleventh aspect is a method of confirming whether a legitimate student is in attendance in a remote education setting, comprising the steps of acquiring video of the student, matching the acquired video with a preregistered facial image of the student, requesting the student to perform an action, and detecting the action by the student on the basis of image changes in the acquired video.

Because video of the student sent from the student terminal is acquired during the step of acquiring video of the student, and the acquired video of the student is matched with a preregistered facial image of the student in the step of matching the preregistered facial image of the student, it is possible to confirm that the acquired video is video of the legitimate student. Furthermore, because the student is requested to perform an action during the step of requesting an action, and the actions of the student are then detected in the step of detecting an action, on the basis of image changes in the acquired video of the student, it is possible to detect a substitute attendance, because the image changes corresponding to the action request do not occur if the legitimate student ask a third person to be a substitute attendance using prerecorded video or the like, and thus the attendance of the legitimate student can be confirmed.

Examples of the action requested of the student in the step of requesting an action include any action that causes changes in the acquired video, and suitable examples include moving the head, closing the eyes, moving the mouth, or raising a hand.

An attendance confirmation method according to a twelfth aspect is an attendance confirmation method according to the eleventh aspect, wherein the step of requesting an action includes a step of requesting that the student move the position of his or her face, and the step of detecting the action includes a step of detecting whether the position of the face of the student has moved.

Because the student is requested to move his or her face during the step of requesting an action, and the movement of the student's face position is then detected in the step of detecting the action, on the basis of image changes in the acquired video, it is possible to detect a substitute attendance, because the position of the face will not move as instructed if the legitimate student ask a third person to be a substitute attendance using prerecorded video or the like, and thus the attendance of the legitimate student can be confirmed.

An attendance confirmation method according to a thirteenth aspect is an attendance confirmation method according to either one of the eleventh and twelfth aspects, wherein the step of requesting an action includes a step of asking the student a question and requesting an audio response, and the step of detecting the action includes a step of acquiring audio of the student, a step of performing recognition of the audio response from the acquired audio, a step of determining the validity of the audio response of the student from the recognized audio response, and a step of detecting movement of the mouth of the student accompanying the audio response of the student.

Because the student is asked a question and requested to provide an audio response during the step of requesting an action, and then during the subsequent step of detecting the action, audio of the student is acquired, the audio response is subjected to recognition, and the validity of that audio response is determined, while movement of the mouth of the student accompanying the audio response is also detected from image changes in the acquired video, confirmation can be obtained that the student determined as the legitimate student in the step of matching the preregistered facial image of the student has provided the audio response to the question, and thus the attendance of the legitimate student can be confirmed.

An attendance confirmation method according to a fourteenth aspect is an attendance confirmation method according to the thirteenth aspect, wherein the step of detecting the action includes a step of matching the audio response of the student with preregistered audio of the student.

Because the audio response of the student is matched with preregistered audio of the student in the step of detecting the action, voice matching of the student is performed in addition to facial image matching, and the attendance of the legitimate student can be confirmed with even greater reliability.

An attendance confirmation method according to a fifteenth aspect is an attendance confirmation method according to either one of the thirteenth and fourteenth aspects, wherein the step of requesting an action includes a step of asking the student a question relating to time and requesting an audio response, and the step of detecting the action includes a step of determining the validity of the time given in response by the student.

Because the student is asked a question relating to time in the step of requesting an action, and in the subsequent step of detecting the action, the validity of the time given in response by the student is determined, while detecting the movement of the mouth of the student accompanying the audio response on the basis of image changes in the acquired video, it is possible to detect a substitute attendance, because the third person cannot provide an requested response to the question relating to time if the legitimate student ask a third person to be a substitute attendance using prerecorded video or the like, and thus the attendance of the legitimate student can be confirmed.

For example, the question relating to time may be a request for the student to provide an audio response consisting of the current time, and the validity of the time provided as an audio response by the student may be determined by comparing the current time to the time obtained by performing speech recognition of the audio response of the student.

An attendance confirmation method according to a sixteenth aspect is an attendance confirmation method according to any one of the thirteenth through fifteenth aspects, wherein the step of requesting an action includes a step of asking a question relating to personal information of the student and requesting an audio response, and the step of detecting the action includes a step of matching the personal information given in response by the student with preregistered personal information relating to that student.

The student is asked a question about his or her personal information in the step of requesting an action, and in the subsequent step of detecting the action, the personal information given in response by the student is matched with preregistered personal information relating to that student, and the movement of the mouth of the student accompanying the audio response is detected on the basis of image changes in the acquired video. Consequently it is possible to detect a substitute attendance, because the third person cannot provide an audio response to the question relating to personal information if the legitimate student asks a third person to be a substitute attendance using prerecorded video or the like, and thus the attendance of the legitimate student can be confirmed.

The personal information of the student requested as an audio response is preferably selected at random from a plurality of preregistered items of personal information. By doing so, a substitute attendee cannot predict the answer in advance, and it is possible to confirm that the legitimate student is in attendance with even greater reliability.

An attendance confirmation method according to a seventeenth aspect is an attendance confirmation method according to any one of the eleventh through sixteenth aspects, wherein the step of detecting the action includes a step of determining that the facial image of the student does not move in a discontinuous manner.

According to this aspect, because it is possible to detect discontinuous positional changes in the facial image that occur when a third person attendee switches the video sent from the terminal to a prerecorded video in response to an action request, it is possible to prevent a substitute attendance by a third person with greater certainty, and confirm the attendance of the legitimate student with even greater reliability.

An attendance confirmation method according to an eighteenth aspect is an attendance confirmation method according to any one of the eleventh through seventeenth aspects, wherein the step of detecting the action has a step of determining whether image changes occur within a specified time from requesting to perform an action by the step of requesting an action.

According to this aspect, it is possible to determine non-attendance of the legitimate student if the required image changes do not occur within a predetermined time of the action being requested. Accordingly, even supposing that it were possible to generate video and the like corresponding to the action request at the terminal, the substitute attendee can be denied sufficient time to prepare such video, and it is therefore possible to confirm that the legitimate student is in attendance with even greater certainty.

An attendance confirmation method according to a nineteenth aspect is an attendance confirmation method according to any one of the eleventh through eighteenth aspects, wherein the step of requesting an action uses unpredictable timing when requesting the student to perform an action.

According to this aspect, because the student cannot predict when an action request will occur, the student cannot leave the student terminal during a lecture, which works as an incentive to ensure that the student is continuously in attendance throughout the entire lecture.

An attendance confirmation method according to a twentieth aspect is an attendance confirmation method according to any one of the eleventh through nineteenth aspects, wherein the step of requesting an action requests the student to perform an action based on a command by the lecturer.

According to this aspect, because the lecturer can control the timing with which action requests are issued to students, attendance confirmation can be performed without impacting on the learning of the student.

An attendance confirmation program according to a twenty-first aspect is a program for executing, on a computer, an attendance confirmation method according to any one of the eleventh through twentieth aspects.

By equipping a computer system with a program for executing each of the steps of an attendance confirmation method according to any one of the eleventh through twentieth aspects, it is possible to prevent a substitute attendance by a third person and confirm that the legitimate students are in attendance in a remote education setting.

These and other objects, features and advantages of the invention will be more readily apparent from the following detailed description of the invention taken in conjunction with the accompanying drawings.

### BRIEF DESCRIPTION OF THE DRAWINGS

Fig. 1 is a system configuration diagram of a remote education system according to an embodiment of the present invention;
Fig. 2 is a diagram showing an example of a screen displayed on a student terminal by a remote education system according to an embodiment of the present invention;
Fig. 3 is a flowchart (1 of 3) of an attendance confirmation program of a remote education system according to an embodiment of the present invention;
Fig. 4 is a flowchart (2 of 3) of the attendance confirmation program of the remote education system according to the embodiment of the present invention; and
Fig. 5 is a flowchart (3 of 3) of the attendance confirmation program of the remote education system according to the embodiment of the present invention.

### BEST MODE FOR CARRYING OUT THE INVENTION

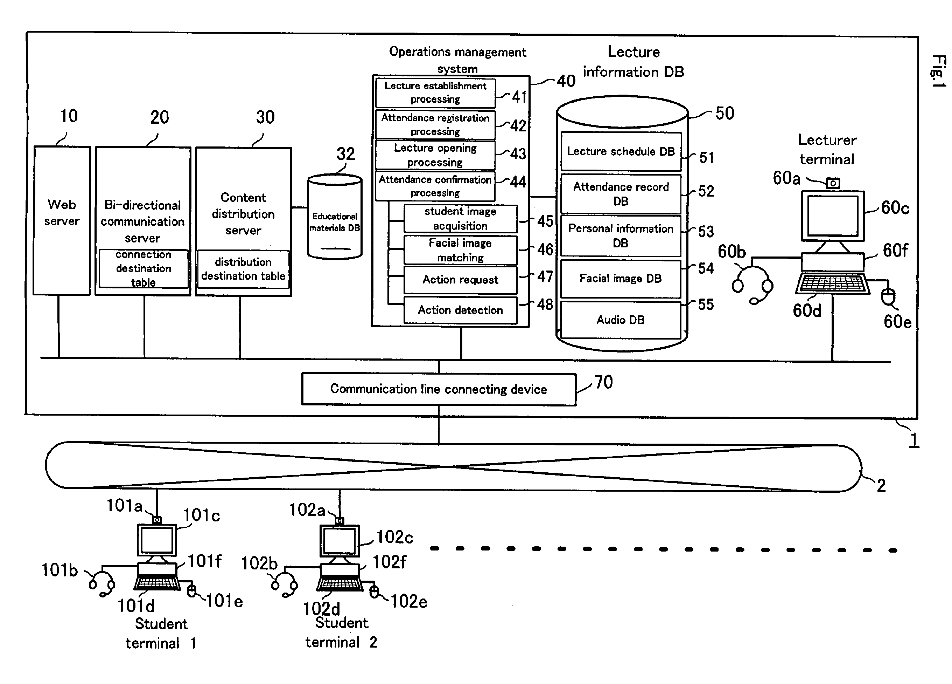

Fig. 1 is a system configuration diagram of a remote education system according to an embodiment of the present invention. In the diagram, the reference numeral 1 indicates a remote education system. The system 1 comprises a Web server 10, a bidirectional communication server 20, a content distribution server 30, an operations management system 40, a lecturer terminal 60 which is used by a lecturer, and a communication line connecting device 70, which are all connected together by a network. The remote education system are connecting to student terminals 101, 102, and so on, used by students, via a communication line 2, when a remote education services are provided.

The Web server 10 is a WWW server which acts as a mediator when using the present system, and tasks such as the setting and progression of lectures, as well as attendance related procedures, can be performed by using a web browser to access a predetermined page from either the lecturer terminal 60, or the student terminals 101, 102, and so on.

The bidirectional communication server 20 comprises a connection destination table for storing the terminal addresses of terminals with which connections are made, and connects to terminals that are registered in this connection destination table, providing a bidirectional communication function based on multimedia information including video and audio. During a lecture, the terminal addresses of the lecturer terminal 60 and the student terminals 101, 102, and so on used by the students who are attending the lecture are registered in the connection destination table. The bidirectional communication server 20 then receives video and audio sent from the lecturer terminal 60, as well as video and audio sent from the student terminals 101, 102, and so on, integrates the received video and audio, and transmits the result to the lecturer terminal 60 and the student terminals 101, 102, and so on.

The content distribution server 30 comprises an educational material database 23 for storing multimedia educational material including moving images, still images, audio, text, and sound effects. The server 30 provides a function for distributing specified content to the terminals registered in the connection destination table. During a lecture, the terminal addresses of the lecturer terminal 60 and the student terminals 101, 102, and so on used by the students who are attending the lecture are registered in the connection destination table, and the educational material content specified by the lecturer terminal 60 is distributed to each terminal.

The operations management system 40 is a system for managing the remote education operations, and comprises a lecture information database 50 for storing a variety of data relating to the lectures to be provided, and performs such processings as a lecture establishment processing 41 for establishing lectures, an attendance registration processing 42 for receiving attendance for the established lectures, a lecture opening processing 43 for opening the established lectures and an attendance confirmation processing 44 for confirming student attendance of the opened lectures.

The lecturer terminal 60 comprises a television camera (a) for acquiring video of the lecturer, a headset (b) for inputting and outputting audio to and from the lecturer, a monitor screen (c) for displaying images, a keyboard (d) and a mouse (e) for inputting commands and messages, and a computer (f), which comprises a video input interface, an audio input/output interface, and a network connection device and the like. On the computer are installed a video and audio communication program, which acquires video and audio of the lecturer and transmits this information to the bidirectional communication server 20, and also outputs video and audio sent from the bidirectional communication server 20 to the monitor screen and the headset respectively, a content display program for outputting images and audio distributed from the content distribution server 30 to the monitor screen and the headset, and a web browser for accessing the Web server 10.

The communication line 2 may be adapted to any type of communication line including a wired computer networks, a wireless computer network, a telephone line, a satellite line, and the Internet, although in the following description, the Internet is used as an example. Accordingly, the communication line connecting device 70 uses an internet router for connecting to the Internet.

The student terminals 101, 102, and so on are similar to the lecturer terminal 60, and each comprise a television camera (a) for acquiring video of the student, a headset (b) for inputting and outputting audio to and from the student, a monitor screen (c) for displaying images, a keyboard (d) and a mouse (e) for inputting commands and messages, and a computer (f), which comprises a video input interface, an audio input/output interface, and a network connection device and the like. On the computer are installed a video and audio communication program, which acquires video and audio of the student and transmits this information to the bidirectional communication server 20, and also outputs video and audio sent from the bidirectional communication server 20 to the monitor screen and the headset respectively, a content display program for outputting images and audio distributed from the content distribution server 30 to the monitor screen and the headset, and a web browser for accessing the Web server 10.

Next, the steps involved in implementing remote education using the remote education system 1 of the present invention are described.

First, the administration office presenting the remote education accesses the page for the office on the Web server 10 from either the lecturer terminal 60 or a dedicated office terminal (not shown in the figure), and then decides and inputs the lectures which are to be established, based on the academic calendar and the corresponding lecturer schedules. As a result, a lecture schedule database 51 is constructed in the lecture information database 50 by the lecture establishment processing 41 of the operations management system 40, and an attendance record is generated for each lecture and registered in an attendance record database 52.

Furthermore, the administration office then begins student recruitment, and issues an ID and password for accessing the Web server 10 to each student who satisfies a predetermined standard for enrolling. Each student issued with an ID and password accesses the student page on the Web server 10 from his or her student terminal and registers his or her personal information, registers a facial image used to match facial images when confirming attendance, and registers an audio file that is used to match audio responses to questions relating to personal information when confirming attendance.

During the registration of personal information, the attendance registration processing 42 of the operations management system 40 registers the name, age, gender, date of birth, address, telephone number, e-mail address, and the like input by each student in the personal information database 53 of the lecture information database 50, together with the ID and password for that student, and the terminal address of each student terminal. Furthermore, a determination as to whether the student who wants to attend the lecture can attend the lecture or not is made by referring to the lecture schedule database 51, and if attendance is possible, then the student in question is registered in the attendance record of the relevant lecture in the attendance record database 52.

During the facial image registration, the attendance registration processing 42 of the operations management system 40 sets the terminal address of the relevant student terminal and the address of the operations management system in the connection destination table of the bidirectional communication server 20, and records a frame of video as a still image at the time when the student clicks a facial image registration button (not shown in the figure) provided on the web page, and then registers this still image in the facial image database 54 of the lecture information database 50.

During the audio registration, the attendance registration processing 42 of the operations management system 40 sets the terminal address of the relevant student terminal and the address of the operations management system in the connection destination table of the bidirectional communication server 20, and acquires an audio from the student when he or she clicks the audio registration button (not shown) provided for each item of personal information on the Web page, and then registers the acquired audio in the audio database 55 of the lecture information database 50 according to each item of personal information.

When the date and time of the lecture set in the lecture schedule database 51 arrives, the lecture is opened in the bidirectional communication server 20 and the content distribution server 30 by the lecture opening processing 43.

When the students of the lecture access the attendance reception page from the student terminals 101, 102, and so on, and check in using their predetermined IDs and passwords, the terminal addresses of the relevant student terminals are set in the connection destination table of the bidirectional communication server 20 and the distribution destination table of the content distribution server 30.

Furthermore, when the lecturer of the relevant lecture accesses the lecturer reception page on the Web server from the lecturer terminal 60, the terminal address of the lecturer terminal 60 is set in the connection destination table of the bidirectional communication server 20 and the distribution destination table of the content distribution server 30.

The attendance confirmation described below is performed by the attendance confirmation processing 44 of the operations management system 40 for the students who have checked in, and if the student is confirmed as a legitimate student, then the time of attendance is recorded in the attendance record.

In this manner, the lecture begins, and the lecturer conducts the lecture from the lecturer terminal 60, distributing video and audio of the lecturer to the student terminals. Furthermore, the lecturer can control the content distribution server 30 from the lecturer terminal 60, via the Web server 10, and by searching the educational material database 32 for the necessary educational material and then playing back the material, the relevant educational material is distributed to the students.

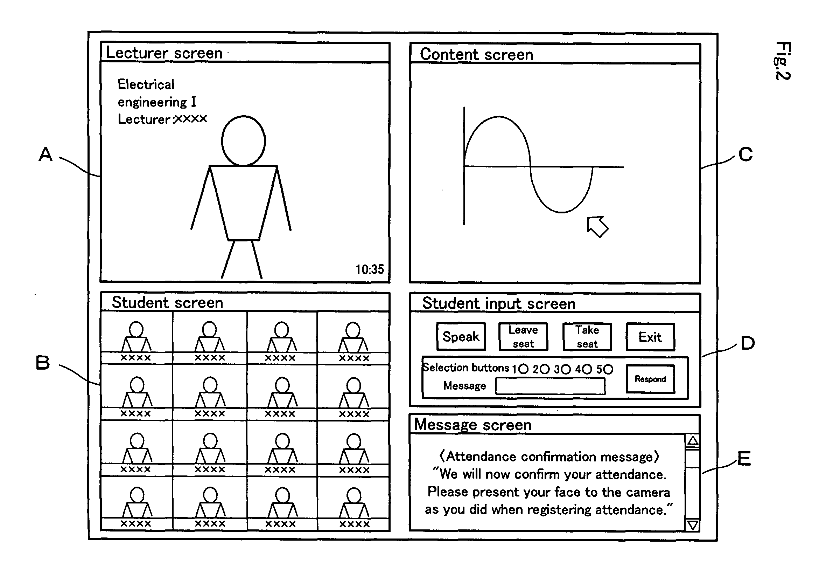

Fig. 2 shows an example of the screen which appears on the monitor screen of the student terminals 101, 102, and so on during the lecture. In the figure, symbol A indicates the lecturer screen for displaying video of the lecturer sent from the lecturer terminal 60, and symbol B indicates the student screen for displaying video of the students sent from the student terminals 101, 102, and so on, together with their names. The reason that the names of the students are displayed in the student screen B is so that the lecturer can request a comment or a response from a specific student using his or her name.

Symbol C indicates the content screen for displaying a content distributed from the content distribution server 30, and a pointer can be displayed on the content screen C by an operation from the lecturer terminal 60, and this pointer can be used to indicate points of interest to the students when describing the contents of the educational material being presented.

Symbol D indicates an input screen for receiving input when the student makes a comment, responds to a question asked by the lecturer, or leaves in midcourse and exits the lecture, and symbol E indicates a message screen for displaying messages to the students from the lecturer terminal and the operations management system. The messages issued to the student when the attendance confirmation processing 44 confirms the attendance of the student are displayed in this message screen E.

The display on the monitor screen of the lecturer terminal 60 is the same as that of the monitor screen of the student terminals, with the exception that the command input screen D also includes buttons for controlling the search for, and reproduction of, content distributed by the content distribution server 30, as well as control buttons for the pointer displayed in the content screen C.

During the lecture, students may ask a question or make a comment to the lecturer by clicking the speak button. When a student clicks the speak button, the student in question flickers in the student screen B, and the lecturer can accept the comment by clicking the display of that student from the lecturer terminal. At this time, the video of the relevant student is scaled up for distribution to the lecturer terminal and to each student terminal, and the audio of the relevant student is also distributed to the lecturer terminal and the other student terminals. As a result, the relevant student can converse with the lecturer using video and audio, and the contents of the conversation are also transmitted to the other students.

Furthermore, during the lecture, the lecturer can also set questions for all of the students or a specific student to answer. When a student or students specified by the lecturer either click a selection button or input a message into the message box and click the respond button, the contents of the response are transmitted to the operations management system 40 via the Web server 10, and the aggregated results are displayed on the lecturer terminal 60. Furthermore, the lecturer can also display those aggregated results to the students if necessary, in which case the aggregated results are distributed to the student terminals via the content distribution server 30 on an instruction from the lecturer terminal 60.

During the lecture, attendance confirmation is performed as needed by the attendance confirmation processing 44 of the operations management system 40 in the manner described below, thus enabling confirmation that the legitimate students are in attendance.

When a student needs to leave in midcourse for a toilet break or the like, he or she clicks the leave seat button. In this case, the image of the relevant student in the student screen B changes to an away mark, and the time when he or she left is recorded in the attendance record. Furthermore, when the student returns, he or she clicks the take seat button. As a result, the away mark of the relevant student in the student screen B returns to normal, and the time when he or she returned is recorded in the attendance record. Furthermore, each student clicks the exit button at the end of the lecture or if he or she wishes to exit the lecture early. As a result, the time when the student exits is recorded in the attendance record, and the terminal address of the relevant student is deleted from the connection destination table and the distribution destination table, thereby terminating the attendance of the student.

In this manner, the lecturer can accurately ascertain the attendance status, and because the arrival time, exit time, leave times, and return times are recorded automatically in the attendance record, it is possible to ascertain the actual attendance time for the lecture in question. In particular, in the remote education system 1 of this embodiment, because attendance confirmation for each student may be performed at any time by the attendance confirmation processing 44, it can be expected that students will be very careful about managing their attendance time at lectures, to avoid being marked as absent.

In addition, the bidirectional communication server 20 has an application sharing function which can run a common application between the lecturer terminal and the student terminals and exchange information on the operations performed at each terminal between the terminals, thereby sharing the application between all participants. Consequently, it is possible to implement a lecture in the form of a seminar in which a common whiteboard on which text and graphics can be drawn is displayed on the screen of each terminal, and the discussion progresses with the lecturer and the students adding text and graphics freely to the whiteboard.

Furthermore, a function is also provided whereby a chat screen is displayed on each terminal, and text-based conversation or discussion takes place between the lecturer and the students.

In this manner, according to the remote education system 1 of this embodiment, each student can receive video and audio of the lecturer from the bidirectional communication server 20, while receiving multimedia educational material distributed from the content distribution server 30, and the lecturer can set questions for the students and request responses, or accept questions or comments from students and establish a conversation based on audio and video using the bidirectional communication server 20. Consequently, the same level of teaching effectiveness can be obtained as if the students were given a lesson in a lecture room using common educational materials, even though each student is in a distant location.

In the embodiment described above, video of each student is displayed in the student screen B, but it is also possible to use an icon based display, in which a still image is displayed except when the student asks a question or makes a comment to the lecturer. As a result, even if the communication line has limited bandwidth, remote education can still be implemented without placing a large burden on the communication lines.

Furthermore, in the embodiment described above, the name of each student is displayed in the student screen B, but it is also possible to display only video or an icon of each student in the student screen B, and provide the attendance record corresponding to the student screen to the lecturer terminal separately.

In the embodiment above, the description focused on the case of a manned lecture, where the lecture is performed live by a lecturer, but it is also possible to set up unmanned lectures, which are performed using a lecture video. In this case, the lecture video is created in advance by the administration office, and is registered in the educational material database 32 of the content distribution server 30, and the lecture video to be used is set in the lecture schedule database 51. When the date and time of the lecture arrives, the lecture opening processing 43 of the operations management system 40 specifies the lecture video for distribution by the content distribution server 30, and starts the lecture automatically. Appropriate questions are set within the lecture video, and the responses of the students to these questions are collected and recorded automatically. Furthermore, if the students have questions or the like, they can send them to the administration office by e-mail, where they are forwarded to the lecturer concerned and answered at a later date.

Next, the attendance confirmation processing 44 of the operations management system 40 is described in detail.

The attendance confirmation processing 44 comprises a student image acquisition processing 45 for acquiring an image of each student transmitted from each student terminal, a facial image matching processing 46 for matching the acquired image of each student with the facial image of that student in the facial image database 54, an action request processing 47 for requesting, of each student who passes facial image matching, an action accompanying changes in the image transmitted from the student terminal, and an action detection processing 48 for detecting changes in the image transmitted from the student terminals in response to the requested action. In the present embodiment, the three kinds of actions are requested to each student such as moving the head position as instructed, giving the current time verbally, and answering a question relating to personal information verbally.

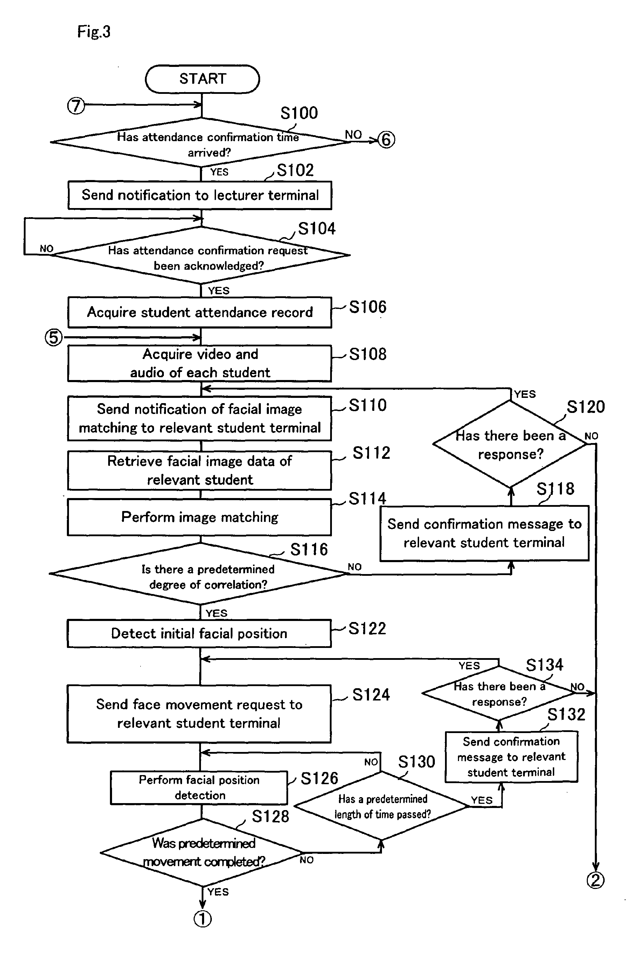

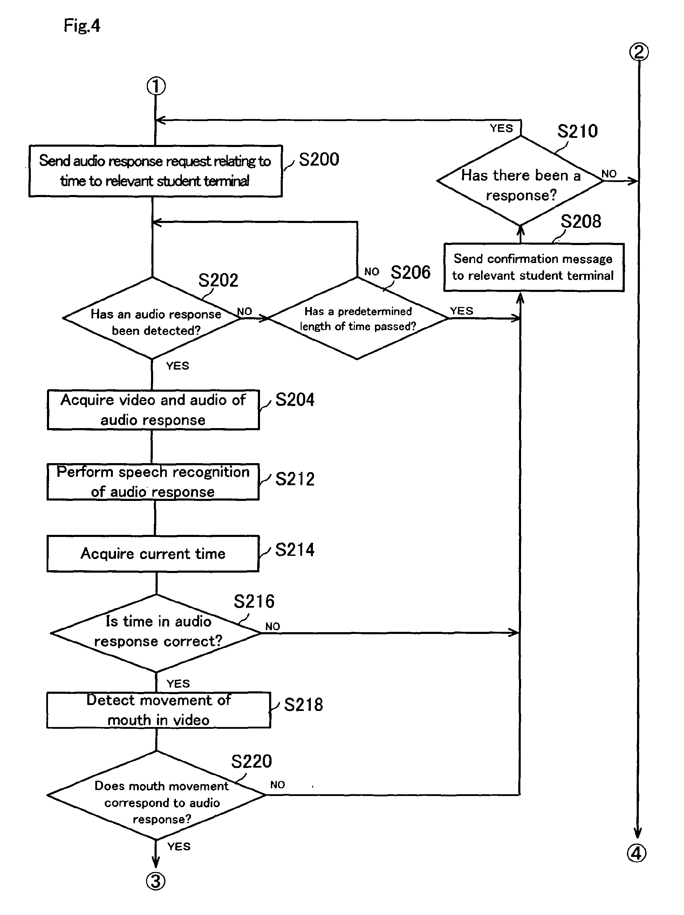

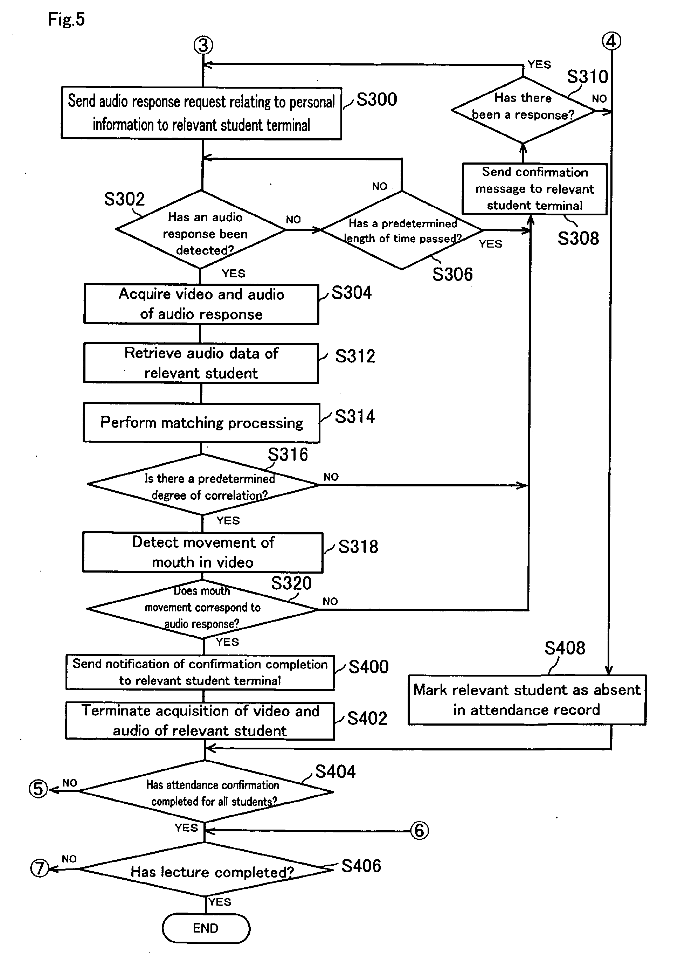

Fig. 3 through Fig. 5 show the processing flow of the attendance confirmation processing 44.

As shown in the figure, when the attendance confirmation time arrives (S100), an attendance confirmation request is sent to the lecturer terminal 60 (S102), and when the lecturer acknowledges the attendance confirmation request, attendance confirmation is performed (S104). The start of the lecture and a random time during the lecture are chosen as attendance confirmation times. Performing attendance confirmation at a random time during the lecture ensures that the students cannot predict when attendance confirmation will occur, which works as an incentive to ensure that the students are continuously in attendance throughout the entire lecture. However, because it may be disruptive to perform attendance confirmation while the lecturer is in the middle of performing the lecture, the attendance confirmation request is first sent to the lecturer, and attendance confirmation is performed only after the lecturer suspends the lecture and clicks the acknowledge button for the attendance confirmation request. In the case of an unmanned lecture using a lecture video, attendance confirmation may be performed, for example, by registering points where interruption is possible in the lecture video, and pausing playback of the lecture video at the first point where interruption is possible after the attendance confirmation request is issued.

If the attendance confirmation time has not yet been reached, the flow proceeds to S406 and repeats until the lecture ends.

Next, the attendance record for the relevant lecture is acquired from the attendance record database 52 (S106), the terminal addresses of the student terminals of the students registered in the attendance record are sent to the bidirectional communication server 20, video and audio of the relevant students is acquired (S108), and a notification of facial image confirmation is sent to the relevant student terminals (S110). For example, the message "We will now confirm your attendance. Please present your face to the camera as you did when registering attendance" is displayed in the message screen. At this time, it is possible to add the message "click here when ready" so that the Web server 10 detects when "here" is clicked, enabling the flow to proceed to the next step.

Facial image data for each student is then retrieved from the personal information database 53 (S112), and a still image of the student, extracted from the video that is currently being acquired, is matched with the facial image data of that student (S114). In image matching, direct matching processing of the acquired video of the student is performed using the facial image data of the relevant student as a template, to determine the point with the highest degree of correlation. It is also possible to perform matching processing after normalizing the image size of the still image extracted from the acquired video of the student using a feature extraction calculation, which determines the size of the outside contour of the face, or the position or shape of the eyes, nose, or mouth, and it is also possible to compare the results of feature extraction calculation for the facial image data of the relevant student.

As a result of the image matching, if a predetermined degree of correlation is obtained, then the flow proceeds to the next step (S116), whereas if a predetermined degree of correlation is not obtained, a confirmation message is sent to the relevant student terminal (S118). If there is a response to the message, the flow returns to step S110 and the facial image confirmation request is repeated (S120), whereas if there is no response, the flow proceeds to S408 and the student is marked as absent in the attendance record.

Next, facial movement confirmation is performed. First, the initial position of the face of the student in the extracted still image is detected (S122). The position of the face is determined as the point where the degree of correlation is highest for the matching processing performed in the facial matching described above.

A facial movement request is then sent to the relevant student terminals (S124). For example, a message such as "Please move your face approximately 10 cm to the right" is displayed in the message screen. The direction in which the face is to be moved and the movement distance can be changed at random, as appropriate. As a result, it is almost impossible to achieve image confirmation using video that has been prepared in advance, enabling a substitute attendance by third person to be prevented.

Here, facial position detection of each student is performed in a continuous manner on the acquired video from the student, using the image matching described above (S126), and when a change in the position of the face that corresponds to the above message is detected, the flow proceeds to the next step (S128). Furthermore, if a change in the position of the face is not detected within a predetermined time (S130), a confirmation message is sent to the relevant student terminal (S132). If there is a response to the message, the flow returns to step S120 and the facial movement request is repeated (S134), whereas if there is no response, the flow proceeds to S408 and the relevant student is marked as absent in the attendance record.

Next, time related audio response confirmation is performed. First, a time-based audio response request is sent to the relevant student terminals (S200). For example, a message such as "Please respond verbally with the current time displayed in the lecturer screen" is displayed on the message screen. The audio response of each student is detected from the signal level of the audio being acquired from that student, and if a sequential audio response is detected (S202), video and audio is acquired during the audio response (S204). If a predetermined time elapses before a sequential audio response is detected (S206), a confirmation message is sent to the relevant student terminal (S208). If there is a response to the message, the flow is repeated from S200 (S210), whereas if there is no response, the flow proceeds to S408 and the relevant student is marked as absent in the attendance record.

Speech recognition is then performed on the audio acquired during the audio response (S212). Because in this case, the object of the speech recognition is limited to recognizing a time, a matching process is performed in syllable units, using a speech dictionary relating solely to time. As there are only a limited number of words to identify, unspecified-speaker speech recognition using a speech dictionary based on recordings of an unspecified speaker may be used to recognize the speech, but specified-speaker speech recognition, in which the student registers speech relating to the time in advance, and this preregistered audio is then used as the speech dictionary, may also be used.

The current time displayed on the lecturer screen is then acquired (S214), and if the time given by the speech recognition in the audio response is within a predetermined margin of error (S216), mouth movement is detected in the video acquired during the audio response (S218). In this mouth movement detection, shape parameters are determined for the mouth by the feature extraction calculation described above, for those frames of the video which were acquired during the audio response and which correspond to each syllable identified by the speech recognition, and these parameters for each syllable are then compared with mouth shape parameters obtained from a table that registers the relationship between syllables and mouth shape parameters, enabling an overall degree of correlation to be determined. Because the object of this mouth movement determination is to detect whether the video of the student subjected to facial image matching is prerecorded video data, or whether the audio response giving the time is prerecorded audio data, it is not necessary to determine exact correspondence, and for example, a simple method of detecting whether changes occur in the shape of the mouth of the student in the period where the audio response is detected may be used. Furthermore, when specified-speaker speech recognition is performed by having each student preregister audio relating to the time, it is possible to also register corresponding video of the student at the same time as he or she registers the audio, and then make the mouth movement determination by directly comparing the video of the student saying each syllable, as recognized by the speech recognition, with the corresponding preregistered video of the student. Furthermore, it is also possible to make the mouth movement determination by determining and recording the mouth shape parameters from the video of the student when he or she registers audio relating to time, and then comparing these results with the mouth shape parameters determined from the video of the student acquired when he or she says each syllable, as recognized by the speech recognition.

Here, if a determination is made that the mouth movement of the student corresponds with the audio response, then the flow proceeds to the next step (S220). If a determination is made, at S216, that the time given in the audio response is incorrect, or a determination is made, at S220, that the video does not correspond with the audio response, then the flow returns to S208 and a confirmation message is sent to the relevant student terminal. If there is a response, the flow repeats from S200.

In the above embodiment, the case was described in which the time given as an audio response is subjected to speech recognition and compared to the current time, but it is also possible to sequentially extract syllable data corresponding to the current time from a speech dictionary and compare the data piece by piece with the audio from the student acquired during the audio response, and then make a judgment that the time given in the audio response is correct if the predetermined degree of correlation is obtained during the entire audio response.

Next, audio response confirmation of personal information of the student is performed. First, a question item relating to personal information is selected, and an audio response request for that personal information question item is then sent to the relevant student terminals (S300). For example, a message such as "Please respond verbally with your date of birth" is displayed on the message screen. This question item relating to personal information is preferably chosen at random so that the students cannot predict the question. The audio response of each student is detected from the signal level of audio being acquired from that student, and if a sequential audio response is detected (S302), video and audio is acquired during the audio response (S304). If a predetermined time elapses before a sequential audio response is detected (S306), a confirmation message is sent to the relevant student terminal (S308). If there is a response to the message, the flow is repeated from S300 (S310), whereas if there is no response, the flow proceeds to S408 and the relevant student is marked as absent in the attendance record.

Next, the audio data corresponding to the question item relating to personal information of the relevant student is retrieved from the audio database 55 (S312), and using this data as a template, matching processing is performed on the audio acquired during the audio response (S314). As a result, if a predetermined degree of correspondence is obtained (S316), mouth movement is detected in the acquired video of the audio response (S318). In this mouth movement detection, shape parameters for the mouth are determined by the feature extraction calculation described above for the frames of the video acquired during the audio response, and these parameters are compared with mouth shape parameters obtained from a table that records the relationship between mouth shape parameters and characters from the character data of the personal information of the relevant student recorded in the personal information database 53, and an overall degree of correlation is determined. Because the object of this mouth movement determination, as with the time confirmation method used above, is to detect whether the video of the student subjected to facial image matching is prerecorded video data, or whether the audio response giving the time is prerecorded video data, it is not necessary to determine exact correspondence, and for example, a simple method of detecting whether changes occur in the shape of the mouth of the student in the period when the audio response is detected may be used. Furthermore, it is also possible to record video of the student at the same time as he or she registers the audio of the personal information, and then make the mouth movement determination by directly comparing the video acquired during the audio response with the corresponding preregistered video of the student. Furthermore, it is also possible to determine and record the mouth shape parameters as time series data from the video of the student acquired when he or she registers the audio of the personal information, and then make the mouth movement determination by comparing the mouth shape parameters determined from the video of the audio response with the preregistered mouth shape parameters.

Here, if a determination is made that the movement of the mouth of the student corresponds to the audio response, the flow proceeds to the next step (S320). If a determination is made, at step S316, that the personal information is incorrect, or at step S320, that the video does not correspond to the audio response, the flow proceeds to S308, and a confirmation message is sent to the relevant student terminal. If there is a response to the message, the flow is repeated from S300.

After the attendance confirmation processing is completed for each student, a notification of attendance confirmation completion is sent to the relevant student terminal (S400), and a notification is sent to the bidirectional communication server 20, which terminates video and audio acquisition for that student (S402).

After attendance confirmation is completed for all students (S404), the flow then repeats from the start (S100) until the lecture ends.

In the description of the above embodiment, facial image matching, face movement confirmation, time related audio response confirmation, and personal information related audio response confirmation were all performed at each attendance confirmation time, but the present invention is not limited to this configuration, and any one of a combination of facial image matching and facial movement confirmation, a combination of facial image matching and time related audio response confirmation, and a combination of facial image matching and personal information related audio response confirmation may be implemented, or any of these may be chosen and implemented at random at the attendance confirmation time.

Furthermore, in the description of the above embodiment, the actions requested of the student involved moving his or her face or providing an audio response, but the present invention is not limited to these actions, and any action that can be recognized in terms of changes in the video, such as rotating the head, closing the eyes, raising a hand, showing an object with a specific shape to the camera, or showing a piece of paper with a specific shape drawn thereon, can be used to achieve the effect of the present invention.

In the description of the above embodiment, after facial image matching is performed, the actions for face movement confirmation, time related audio response confirmation, and personal information related audio response confirmation are requested, and a determination as to whether the legitimate student is in attendance is made by determining whether the image changes at that time correspond to the request, but it is also possible to provide a function for detecting the position of the face of the student continuously and confirm that the position of the face does not change in a discontinuous manner. As a result, if a substitute attendee, upon receiving an action request, switches to a prerecorded video corresponding to the action request, then the position of the face of the student will move in a discontinuous manner, making it is possible to detect the third person attendance, and the attendance of the legitimate student can therefore be confirmed with even greater reliability.

In the description of the above embodiment, every student attends the lecture from a student terminal, and no students attend the lecture of the lecturer in person, but it is also possible to set up a lecture which mixes both on-site students and remote students, where lectures are conducted in a lecture site equipped with a large screen display device for displaying video sent from the bidirectional communication server 20, and loudspeakers for outputting the audio sent from the bidirectional communication server 20.

Furthermore, it is possible to also provide satellite lecture sites in various locations, with large screen display devices and loudspeakers provided therein, and treat the students gathered in the satellite lecture sites as a single gathering of students.

As a result, students who are capable of traveling to the lecture site or the satellite lecture site can attend in person, and students who cannot travel can attend remotely, and as such, it is possible for a greater number of students to simultaneously attend a lecture by a single lecturer. In this case, it goes without saying that terminals which have an input function for answering questions, and video input and audio input functions for attendance confirmation may also be provided for the students at the lecture site and the students at the satellite lecture sites.

In the description of the above embodiment, the remote education system comprises a content distribution server, and the educational materials used in the lecture are distributed to each student terminal by the content distribution server, but the present invention is not limited to this configuration, and it is possible to simply run educational software on the screen or the like of the lecturer terminal, and then capture this software using the camera which acquires video of the lecturer. Furthermore, it is also possible to provide external video and audio input terminals on the lecture terminal, and connect a VTR or DVD or the like to the terminals, and then either combine the video and audio of the educational software played by the lecturer with video and audio of the lecturer, or switch between the two, and send the result to the bidirectional communication server, which then distributes the data to each student terminal.

In the description of the above embodiment, the lecturer terminal is connected to an internal network of the remote education system, but the present invention is not limited to this configuration, and the lecturer terminal may be connected to the remote education system via the Internet. As a result, the lecturer can conduct a lecture from anywhere as long as he or she has a lecturer terminal capable of connecting to the Internet, which enables people living overseas to be invited as a lecturer and also simplifies scheduling and contributes to lower personnel expenses.

In the description of the above embodiment, the remote education system comprises a Web server, and the student terminals perform tasks relating to attendance by accessing the Web server using a computer with a Web browser function, but the present invention is not limited to this configuration, and by using a normal videophone as the student terminal, transmission of messages from the operations management system to the student terminals can be realized by a function for incorporating message images in the bidirectional communication server and sending the result to the student terminal, and the input of commands and messages to the operations management system from the student terminal can be realized by providing a function for using the dialing buttons of the user terminal, and having the bidirectional communication server detect the PB tone signals. As a result, a telephone-type videophone terminal that connects to a public telephone line, such as an ISDN videophone in accordance with the ITU-T recommended H.320 protocol or an IP (Internet Protocol) type videophone terminal that connects to the Internet, such as an IP videophone terminal in accordance with the ITU-T recommended H.323 protocol, can be used. In this case, video codecs and audio codecs corresponding to the protocol of the student terminals must be provided on the bidirectional communication server, but by providing a gateway which performs protocol conversion, it is possible to have a mixture of student terminals based on various protocols.

### INDUSTRIAL APPLICABILITY

As described above, the present invention has the effects of preventing a substitute attendance by a third person using prerecorded video and the like, and enabling confirmation that the legitimate students is in attendance.

## Claims

1. A remote education system that enables education over distances using multimedia bi-directional communication, including video and audio, comprising:
student video acquisition means for acquiring video of the student;
facial image matching means for matching the video acquired by the student video acquisition means with a preregistered facial image of the student;
action request means for requesting the student to perform an action; and
action detection means for detecting the action performed by the student on the basis of image changes in the video of the student acquired by the student video acquisition means, thereby providing the system with a function for confirming that the legitimate student is in attendance.

2. The remote education system according to claim 1, wherein
the action request means includes a function for requesting that the student moves the position of his or her face, and
the action detection means includes a function for detecting whether the position of the face of the student has moved.

3. The remote education system according to claim 1 or 2, wherein
the action request means includes a function for asking the student a question and requesting an audio response, and
the action detection means includes:
a function for acquiring audio of the student;
a function for recognizing the audio response from the acquired audio;
a function for determining the validity of the audio response of the student from the recognized audio response; and
a function for detecting movement of the mouth of the student accompanying the audio response by the student.

4. The remote education system according to claim 3, wherein
the action detection means includes a function for matching the audio response of the student with preregistered audio of the student.

5. The remote education system according to claim 3 or 4, wherein
the action request means includes a function for asking the student a question relating to time and requesting an audio response, and
the action detection means includes a function for determining the validity of the time given in response by the student.

6. The remote education system according to any one of claims 3 to 5, wherein
the action request means includes a function for asking a question relating to personal information of the student and requesting an audio response, and
the action detection means includes a function for matching the personal information given in response by the student with preregistered personal information relating to that student.

7. The remote education system according to any one of claims 1 to 6, wherein
the action detection means includes a function for determining that the facial image of the student does not move in a discontinuous manner.

8. The remote education system according to any one of claims 1 to 7, wherein
the action detection means has a function for determining whether image changes occur within a specified time of the action request means requesting the student to perform an action.

9. The remote education system according to any one of claims 1 to 8, wherein
the action request means has a function for using unpredictable timing when requesting the student to perform an action.

10. The remote education system according to any one of claims 1 to 8, wherein
the action request means has a function for requesting the student to perform an action based on a command by the lecturer.

11. An attendance confirmation method of confirming whether a legitimate student is in attendance in a remote education setting, comprising the steps of:
acquiring video of the student;
matching the acquired video with a preregistered facial image of the student;
requesting the student to perform an action; and
detecting the action by the student on the basis of image changes in the acquired video.

12. The attendance confirmation method according to claim 11, wherein
the step of requesting an action includes a step of requesting the student to move the position of his or her face, and
the step of detecting the action includes a step of detecting whether the position of the face of the student has moved.

13. The attendance confirmation method according to claim 11 or 12, wherein
the step of requesting an action includes a step of asking the student a question and requesting an audio response, and
the step of detecting the action includes:
a step of acquiring audio of the student;
a step of performing recognition of the audio response from the acquired audio;
a step of determining the validity of the audio response of the student from the recognized audio response; and
a step of detecting movement of the mouth of the student accompanying the audio response of the student.

14. The attendance confirmation method according to claim 13, wherein
the step of detecting the action includes a step of matching the audio response of the student with preregistered audio of the student.

15. The attendance confirmation method according to claim 13 or 14, wherein
the step of requesting an action includes a step of asking the student a question relating to time and requesting an audio response, and
the step of detecting the action includes a step of determining the validity of the time given in response by the student.

16. The attendance confirmation method according to any one of claims 13 to 15, wherein
the step of requesting an action includes a step of asking a question relating to personal information of the student and requesting an audio response, and
the step of detecting the action includes a step of matching the personal information given in response by the student with preregistered personal information relating to that student.

17. The attendance confirmation method according to any one of claims 11 to 16, wherein
the step of detecting the action includes a step of determining that the facial image of the student does not move in a discontinuous manner.

18. The attendance confirmation method according to any one of claims 11 to 17, wherein
the step of detecting the action has a step of determining whether image changes occur within a specified time from requesting the student to perform an action by the step of requesting an action.

19. The attendance confirmation method according to any one of claims 11 to 18, wherein
the step of requesting an action uses unpredictable timing when requesting the student to perform an action.

20. The attendance confirmation method according to any one of claims 11 to 18, wherein
the step of requesting an action requests the student to perform an action, based on a command by the lecturer.

21. An attendance confirmation program for executing, on a computer, the attendance confirmation method according to any one of claims 11 to 20.
